# EUROPÄISCHE PATENTANMELDUNG

(11) **EP 4 852 291 A1**
(43) Veröffentlichungstag der Anmeldung: **09.12.2026**
(21) Anmeldenummer: 25181364.8
(22) Anmeldetag: 06.06.2025
(51) Int. Cl.: H02M 3/335, H02M 3/337, H02M 1/00, H02M 3/00

(54) **VERFAHREN ZUM WECHSELN EINES ARBEITSPUNKTES EINES GLEICHSTROM-GLEICHSTROM-WANDLERS**

(71) Anmelder: AmbiBox GmbH, 55124 Mainz (DE)
(72) Erfinder: Fuchs, Simon, 55232 Alzey (DE); Fuller, Morris, 55118 Mainz (DE); Khani, Milad, 64572 Büttelborn (DE)
(74) Vertreter: Hoffmann Eitle

(57) **Zusammenfassung**

Die Erfindung betrifft ein computerimplementiertes Verfahren zum Wechseln eines Arbeitspunktes eines bidirektionalen Gleichstrom-Gleichstrom-Wandlers, bei dem eine Primärseite über einen Transformator mit einer Sekundärseite gekoppelt ist, wobei das Verfahren Folgendes umfasst:
- Bestimmen der neuen Eingangsparameter,
- Ermitteln mindestens einer Stützstelle in einer Lookup Tabelle basierend auf den neuen Eingangsparametern,
- Interpolieren der neuen Steuerungsparameter für die neuen Eingangsparameter basierend auf der mindestens einen Stützstelle,
- Ermitteln der Übergangsparameter basierend auf den neuen Steuerungsparametern und den alten Steuerungsparametern,
- Ansteuern des Gleichstrom-Gleichstrom Wandlers basierend auf den Übergangsparametern.

## Beschreibung

### GEBIET DER ERFINDUNG

Die Erfindung betrifft ein Verfahren zum Wechseln eines Arbeitspunktes eines Gleichstrom-Gleichstrom-Wandlers, eine Vorrichtung, insbesondere eine Recheneinheit, eingerichtet zur Durchführung des Verfahrens sowie einen Gleichstrom-Gleichstrom-Wandler und eine Ladevorrichtung.

### STAND DER TECHNIK

Ein Verfahren zum Wechseln eines Arbeitspunktes eines Gleichstrom-Gleichstrom-Wandlers wird benötigt, wenn sich die Eingangsparameter des Gleichstrom-Gleichstrom-Wandlers ändern. Die Eingangsparameter können die die Spannung der Primärseite, die Spannung der Sekundärseite und die Übertragungsleistung sein. Dabei ändern sich die Eingangsparameter kontinuierlich. Beispielsweise werden Gleichstrom-Gleichstrom-Wandler in einer Ladevorrichtung, insbesondere für Elektrofahrzeuge, verwendet. Bei diesen wird zum Beispiel die Batterie des Elektrofahrzeugs geladen. Hierzu kann der Gleichstrom-Gleichstrom-Wandler eingangsseitig an das Stromnetz, beispielsweise über einen Wechselrichter, angeschlossen sein. Ferner kann eingangsseitig beispielsweise ein Solarmodul und/oder eine weitere Batterie angeschlossen sein.

Mithin können sich die Eingangsparameter des Gleichstrom-Gleichstrom-Wandlers zum Beispiel aufgrund des Ladezustands der Batterie oder aufgrund von wechselnden Spannungen des Solarmoduls ändern. Bei einer Änderung der Eingangsparameter muss der Arbeitspunkt des Gleichstrom-Gleichstrom-Wandlers angepasst werden, um eine effiziente Leistungsübertragung zu gewährleisten. Dabei ändern sich die Eingangsparameter häufig, sodass der Arbeitspunkt des Gleichstrom-Gleichstrom-Wandlers häufig gewechselt werden muss.

Bei einem Wechsel des Arbeitspunktes des Gleichstrom-Gleichstrom-Wandlers müssen die Steuerungsparameter angepasst werden. Die Steuerungsparameter sind beispielsweise ein Tastgrad der Primärseite, ein Tastgrad der Sekundärseite, ein Phasenversatz zwischen der Primärseite und der Sekundärseite und/oder eine Schaltfrequenz. Um die Steuerungsparameter anzupassen, um den Arbeitspunkt zu wechseln, muss die Magnetisierung des Transformators abgebaut und wieder aufgebaut werden. Weiter müssen dabei Asymmetrien im Transformatorstrom ausgeglichen werden. Hierzu werden Übergangsparameter verwendet.

Da sich die Eingangsparameter ständig ändern, muss der Arbeitspunkt häufig gewechselt werden. Daher sollte das Verfahren zum Wechseln eines Arbeitspunktes eines Gleichstrom-Gleichstrom-Wandlers besonders effizient sein. Zudem sollte der Übergang zwischen den Arbeitspunkten schnell gehen, um die Leistungsverluste zu minimieren. Darüber hinaus sollte das Verfahren einfach durchführbar sei, um es mit wenig Rechenleistung durchführen zu können.

Basierend auf diesem Stand der Technik ist es die Aufgabe der vorliegenden Erfindung, ein effizientes Verfahren zum Wechseln eines Arbeitspunktes eines Gleichstrom-Gleichstrom-Wandlers vorzuschlagen, das einen schnellen Arbeitspunktwechsel mit geringem Rechenaufwand gewährleistet.

### ZUSAMMENFASSUNG DER ERFINDUNG

Die oben genannte Aufgabe wird gemäß einem ersten Aspekt der Erfindung mit einem computerimplementierten Verfahren zum Wechseln eines Arbeitspunktes eines bidirektionalen Gleichstrom-Gleichstrom-Wandlers gelöst, bei dem eine Primärseite über einen Transformator mit einer Sekundärseite gekoppelt ist, wobei das Verfahren Folgendes umfasst:
- Bestimmen der neuen Eingangsparameter,
- Ermitteln mindestens einer Stützstelle in einer Lookup Tabelle basierend auf den neuen Eingangsparametern,
- Interpolieren der neuen Steuerungsparameter für die neuen Eingangsparameter basierend auf der mindestens einen Stützstelle,
- Ermitteln der Übergangsparameter basierend auf den neuen Steuerungsparametern und den alten Steuerungsparametern,
- Ansteuern des Gleichstrom-Gleichstrom Wandlers basierend auf den Übergangsparametern.

Das computerimplementierte Verfahren bietet den Vorteil, dass aufgrund der Verwendung einer Look-Up Tabelle und der Ermittlung der Übergangsparameter ein besonders schneller Wechsel des Arbeitspunktes möglich ist. Zudem ist das computerimplementierte Verfahren besonders effizient und es wird nur ein geringer Rechenaufwand benötigt.

Der Arbeitspunkt kann derjenige Punkt im Kennlinienfeld des Gleichstrom-Gleichstrom-Wandlers sein, an dem der Gleichstrom-Gleichstrom-Wandler im stationären Betrieb arbeitet. Der Arbeitspunkt kann von den Eingangsparametern abhängen.

Der Gleichstrom-Gleichstrom-Wandler kann eine elektrische Schaltung sein. Der Gleichstrom-Gleichstrom-Wandler kann die Gleichspannung der Primärseite in eine Gleichspannung der Sekundärseite mit höherem, niedrigerem, gleichem oder invertiertem Spannungsniveau umwandeln. Der Gleichstrom-Gleichstrom-Wandler kann insbesondere bidirektional sein. Der Gleichstrom-Gleichstrom-Wandler kann insbesondere ein Dual-Active-Bridge Konverter sein.

Die Primärseite kann insbesondere die Eingangsseite des Gleichstrom-Gleichstrom-Wandlers sein. Die Sekundärseite kann insbesondere die Ausgangsseite des Gleichstrom-Gleichstrom-Wandlers sein.

Der Transformator kann aus zwei Spulen bestehen. Beispielsweise kann der Transformator zwei Spulen umfassen, wobei die Spulen aus isoliertem Kupferdraht gewickelt sein können und auf einem gemeinsamen Kern angeordnet sein können. Der Transformator kann beispielsweise eine Eingangswechselspannung, in eine Ausgangswechselspannung umwandeln.

Das Bestimmen der neuen Eingangsparameter kann beispielsweise durch Messungen erfolgen. Die neuen Eingangsparameter können insbesondere die Spannung der Primärseite, die Spannung der Sekundärseite und die Übertragungsleistung sein. Die Übertragungsleistung kann ermittelt werden. Beispielsweise kann die Übertragungsleistung vorgegeben werden, insbesondere vom ausgangsseitig angeschlossenen Verbraucher vorgegeben werden. Die Eingangsparameter können als absolute Werte oder als relative Werte ermittelt werden.

Das Ermitteln mindestens einer Stützstelle in einer Lookup Tabelle basierend auf den neuen Eingangsparametern kann das Bestimmen mindestens einer Stützstelle sein, die ähnliche Stützstelleneingangsparameter umfasst. Die Lookup Tabelle kann eine Datenstruktur sein, in der vorberechnete Werte gespeichert sein können, um Berechnungen zu beschleunigen. Die Lookup Tabelle kann mindestens eine Stützstelle umfassen.

Das Interpolieren der neuen Steuerungsparameter für die neuen Eingangsparameter basierend auf der mindestens einen Stützstelle kann die Bestimmung der neuen Steuerungsparameter ausgehend von der mindestens einen Stützstelle sein. Die Interpolation kann beispielsweise eine lineare Interpolation sein. Beispielsweise können bei der linearen Interpolation zwei Stützstellen durch eine Gerade verbunden werden. Die Werte zwischen den zwei Stützstellen können mittels der Geradengleichung zwischen den beiden Stützstellen bestimmt werden.

Insbesondere können acht Stützstellen ermittelt werden. Basierend auf den acht Stützstellen können die neuen Steuerungsparameter interpoliert werden. Insbesondere kann jede der acht Stützstellen im Verhältnis zum Abstand der Stützstelleneingangsparameter zu den neuen Eingangsparametern gewichtet werden.

Die mindestens eine Stützstelle kann Stützstelleneingangsparameter und Stützstellensteuerungsparameter umfassen. Beispielsweise können die Stützstelleneingangsparameter eine weitere Spannung der Primärseite, eine weitere Spannung der Sekundärseite und eine weitere Übertragungsleistung umfassen. Beispielsweise können die Stützstellensteuerungsparameter einen weiteren Tastgrad der Primärseite, einen weiteren Tastgrad der Sekundärseite, einen weiteren Phasenversatz zwischen der Primärseite und der Sekundärseite und eine weitere Schaltfrequenz umfassen.

Die neuen Steuerungsparameter können einen neuen Tastgrad der Primärseite, einen neuen Tastgrad der Sekundärseite, einen neuen Phasenversatz zwischen der Primärseite und der Sekundärseite und eine neue Schaltfrequenz umfassen. Die alten Steuerungsparameter umfassen einen alten Tastgrad der Primärseite, einen alten Tastgrad der Sekundärseite, einen alten Phasenversatz zwischen der Primärseite und der Sekundärseite und eine alte Schaltfrequenz. Die alten Steuerungsparameter können für den alten Arbeitspunkt verwendbar sein.

Das Ermitteln der Übergangsparameter erfolgt basierend auf den neuen Steuerungsparametern und den alten Steuerungsparametern. Die Übergangsparameter können berechnet werden. Insbesondere können die Übergangsparameter zum Abbau und Aufbau der Magnetisierung des Transformators geeignet sein.

Die Übergangsparameter können mindestens einen Übergangstastgrad der Primärseite, mindestens einen Übergangstastgrad der Sekundärseite, und mindestens einen Übergangsphasenversatz zwischen der Primärseite und der Sekundärseite umfassen.

Das Ansteuern des Gleichstrom-Gleichstrom Wandlers basierend auf den Übergangsparametern kann die Änderung des Betriebs des Gleichstrom-Gleichstrom-Wandlers sein.

Das Verfahren ist ein computerimplementiertes Verfahren und kann somit auf einem Computer wie beispielsweise einem Server, einem Laptop, einem Personal Computer, einem Mikrocontroller oder ähnlichem durchgeführt werden. Ein computerimplementiertes Verfahren kann beispielsweise derart verstanden werden, dass der Computer einige oder alle Schritte des Verfahrens ausführt. Dabei kann unter dem Computer eine physische Vorrichtung mit Hardware-Komponenten verstanden werden.

Gemäß einem Ausführungsbeispiel kann die Lookup Tabelle mindestens zwei lokale Lookup Tabellen umfassen, wobei insbesondere die Eingangsparameter der mindestens zwei lokalen Lookup Tabellen zumindest teilweise überlappen.

Auf diese Weise können an kritischen Stellen durch die mindestens zwei lokale Lookup Tabellen stabile und sichere Wechsel des Arbeitspunktes vollzogen werden, in dem durch die mindestens zwei lokalen Lookup Tabellen stabile Stützstellen bereitgestellt werden können.

Die mindestens zwei lokalen Lookup Tabellen können für einen begrenzteren Bereich an Eingangsparametern gültig sein. Die mindestens zwei lokalen Lookup Tabellen können insbesondere überlappen. Beispielsweise können für einige Eingangsparameter beide der mindestens zwei lokalen Lookup Tabellen zur Ermittlung der mindestens einen Stützstelle nutzbar sein.

Gemäß einem Ausführungsbeispiel kann das Ermitteln mindestens einer Stützstelle in einer Lookup Tabelle basierend auf den neuen Eingangsparametern die folgenden Schritte umfassen:
- Bestimmen, dass die neuen Eingangsparameter einem Eingangsparameterbereich von mindestens einer der zwei lokalen Lookup Tabellen entsprechen können,
- Bestimmen, dass für die alten Eingangsparameter die erste der mindestens zwei lokalen Lookup Tabellen zum Ermitteln der mindestens einen Stützstelle genutzt worden sein können, und

a) Bestimmen, dass die neuen Eingangsparameter innerhalb der Wechselgrenzen der ersten der mindestens zwei lokalen Lookup Tabellen sein können, und Ermitteln der mindestens einen Stützstelle in der ersten der mindestens zwei lokalen Lookup Tabelle basierend auf den neuen Eingangsparametern, oder
b) Bestimmen, dass die neuen Eingangsparameter außerhalb der Wechselgrenzen der ersten der mindestens zwei lokalen Lookup Tabellen sein können, und Ermitteln der mindestens einen Stützstelle in der zweiten der mindestens zwei lokalen Lookup Tabelle basierend auf den neuen Eingangsparametern.

Auf diese Weise kann das Verfahren besonders stabil sein, da innerhalb einer lokalen LUT sowohl für die interpolierten Steuerungsparameter, als auch für die Übergangsparameter zwischen zwei neuen und alten Steuerungsparametern Stabilität garantiert werden kann. Dies kann beim Erstellen der lokalen LUTs gewährleistet werden. Fall b) kann nur bei größeren Sprüngen in den Eingangsparametern auftreten, sodass zum Beispiel ein Rauschen auf den Eingangsparametern nicht zu wiederholten Wechseln der lokalen LUTs führen kann.

Die Wechselgrenzen können eine Beschränkung der maximalen Eingangsparameter sein, innerhalb derer die mindestens eine Stützstelle in der ersten der mindestens zwei lokalen Lookup Tabelle basierend auf den neuen Eingangsparametern ermittelbar sein kann. Die Wechselgrenzen können beispielsweise ein festgelegter Schwellwert für die Spannung der Primärseite, ein festgelegter Schwellwert für die Spannung der Sekundärseite und ein festgelegter Schwellwert für die Übertragungsleistung sein. Die Wechselgrenzen können zum Beispiel eine Untergrenze oder eine Obergrenze sein.

Gemäß einem Ausführungsbeispiel kann das Ermitteln der Übergangsparameter basierend auf den neuen Steuerungsparametern und den alten Steuerungsparametern die folgenden Schritte umfassen:
- Bestimmen der alten Steuerungsparameter,
- Vergleich der alten Steuerungsparameter mit den neuen Steuerungsparametern,
- Bestimmen der Übergangsparameter basierend auf dem Vergleich der alten Steuerungsparameter mit den neuen Steuerungsparametern.

Auf diese Weise können die Übergangsparameter besonders einfach und schnell ermittelt werden. Da zum Bestimmen der Übergangsparameter die alten Steuerungsparameter und die neuen Steuerungsparameter berücksichtigt werden können, kann mit dem Verfahren der Arbeitspunkt besonders schnell und effizient gewechselt werden.

Gemäß einem Ausführungsbeispiel kann beim Vergleich der alten Steuerungsparameter mit den neuen Steuerungsparameter dieselbe Schaltfrequenz ermittelt werden, und das Verfahren kann die folgenden Schritte umfassen:
- Berechnen des Übergangstastgrads der Primärseite nach folgender Formel ${d}_{1 , transition} = \frac{{d}_{1 , alt} + {d}_{1 , neu}}{2} ,$
- Berechnen des Übergangstastgrads der Sekundärseite nach folgender Formel ${d}_{2 , transition} = \frac{{d}_{2 , alt} + {d}_{2 , neu}}{2} ,$
- Berechnen des Übergangsphasenversatzes zwischen der Primärseite und der Sekundärseite nach folgender Formel $transition = \left({φ}_{alt}+{φ}_{neu}\right) / 2$

Auf diese Weise können die Übergangsparameter besonders einfach zu bestimmen sein, sodass das Verfahren besonders schnell und mit geringem Rechenaufwand durchführbar sein kann.

d_{1, transition} kann der Übergangstastgrads der Primärseite sein. d_{1, alt} kann der alte Tastgrad der Primärseite sein. d_{1, neu} kann der neue Tastgrad der Primärseite sein. d_{2, transition} kann der Übergangstastgrads der Sekundärseite sein. d_{2, alt} kann der alte Tastgrad der Sekundärseite sein. d_{2, neu} kann der neue Tastgrad der Sekundärseite sein. φₜᵣₐₙₛᵢₜᵢₒₙ kann der Übergangsphasenversatz sein. φ_{alz} kann der alte Phasenversatz sein. φₙₑᵤ kann der neue Phasenversatz sein.

Gemäß einem Ausführungsbeispiel können beim Vergleich der alten Steuerungsparameter mit den neuen Steuerungsparametern unterschiedliche Schaltfrequenzen ermittelt werden, und das Verfahren kann die folgenden Schritte umfassen:
a) Bestimmen, dass die neue Schaltfrequenz größer sein kann als die alte Schaltfrequenz,
   - Berechnen des Übergangstastgrads der Primärseite nach folgender Formel ${d}_{1 , transition} = \frac{{d}_{1 , alt} + k \times {d}_{1 , neu}}{2} ,$
   - Berechnen des Übergangstastgrads der Sekundärseite nach folgender Formel ${d}_{2 , transition} = \frac{{d}_{2 , alt} + k \times {d}_{2 , neu}}{2} ,$
   - Berechnen des Übergangsphasenversatzes zwischen der Primärseite und der Sekundärseite nach folgender Formel $transition = \left({φ}_{alt}+k\times {φ}_{neu}\right) / 2$
   - wobei k=f_{sw,alt}/f_{sw,neu} ist.
   oder
b) Bestimmen, dass die alte Schaltfrequenz größer als die neue Schaltfrequenz ist,
   - Berechnen des Übergangstastgrads der Primärseite nach folgender Formel ${d}_{1 , transition} = \frac{{d}_{1 , neu} + k \times {d}_{1 , alt}}{2} ,$
   - Berechnen des Übergangstastgrads der Sekundärseite nach folgender Formel, ${d}_{2 , transition} = \frac{{d}_{2 , neu} + k \times {d}_{2 , alt}}{2} ,$
   - Berechnen des Übergangsphasenversatzes zwischen der Primärseite und der Sekundärseitnach folgender Formel $transition = \left({φ}_{neu}+k\times {φ}_{alt}\right) / 2$
   - wobei k=f_{sw,neu}/f_{sw,alt} sein kann.

Auf diese Weise können selbst bei sich ändernder Schaltfrequenz die Übergangsparameter besonders einfach zu bestimmen sein. Somit kann das Verfahren besonders schnell und mit geringem Rechenaufwand durchführbar sein. Die Steuerung basierend auf der Lookup Tabelle kann über einen großen Arbeitsbereich aufgrund der einfachen Bestimmbarkeit der Übergangsparameter besonders effizient sein. Insbesondere bei der Übertragung von weniger als 50% der Nennleistung kann die Anpassung der Schaltfrequenz besonders wichtig für eine effiziente Leistungsübertragung sein.

k kann ein Faktor sein. k kann eine Dezimalzahl sein. k kann kleiner 0,5 sein. Zum Beispiel kann k das Verhältnis der alten Schaltfrequenz zur neuen Schaltfrequenz sein. k kann der Quotient aus der kleineren Schaltfrequenz und der größeren Schaltfrequenz sein. Beispielsweise kann die größere Schaltfrequenz der Divisor und die kleinere Schaltfrequenz der Dividend sein. f_{sw,neu} kann die neue Schaltfrequenz sein. f_{sw,alt} kann die alte Schaltfrequenz sein.

Gemäß einem Ausführungsbeispiel kann der Übergang zwischen den Arbeitspunkten innerhalb einer Halbperiode erfolgen, wobei in der Halbperiode die Übergangsparameter angewendet werden können.

Auf diese Weise kann der Wechsel zwischen den Arbeitspunkten besonders schnell erfolgen. Dadurch können Leistungsverluste minimiert werden und ein konstanter Leistungstransfer ermöglicht werden. Somit kann das Verfahren besonders effizient sein.

Eine Halbperiode kann die Hälfte der Gesamtperiode sein. Beispielsweise kann bei der Pulsweitenmodulation eine Halbperiode die Hälfte der Gesamtperiode des Pulsweitenmodulations-Signals sein. Die Gesamtperiode eines Pulsweitenmodulations-Signals kann sich beispielsweise aus einer Ein-Zeit und einer Aus-Zeit zusammensetzten. Die Halbperiode kann die Hälfte der Gesamtperiode sein. Die Halbperiode kann für den Übergang zwischen den Arbeitspunkten sein.

Gemäß einem Ausführungsbeispiel kann die Halbperiode bei unterschiedlichen Schaltfrequenzen der alten Steuerungsparameter und der neuen Steuerungsparameter mit der kleineren der beiden Schaltfrequenz geschaltet werden.

Auf diese Weise kann beim Übergang zwischen den Arbeitspunkten die Magnetisierung des Transformators einfach und effizient abgebaut und aufgebaut werden. Zudem kann der Übergang besonders schnell erfolgen.

Beispielsweise kann der Wechsel zwischen den Arbeitspunkten immer mit der kleineren Schaltfrequenz von der alten Schaltfrequenz und der neuen Schaltfrequenz erfolgen. Beispielsweise können die Übergangsparameter bei der kleineren Schaltfrequenz von der alten Schaltfrequenz und der neuen Schaltfrequenz angewendet werden.

Gemäß einem zweiten Aspekt der Erfindung wir die oben genannte Aufgabe mit einer Vorrichtung, insbesondere einer Recheneinheit, eingerichtet zur Durchführung des erfindungsgemäßen Verfahrens zum Wechseln eines Arbeitspunktes eines bidirektionalen Gleichstrom-Gleichstrom-Wandlers gelöst.

Die Vorrichtung bietet den Vorteil, dass aufgrund der Verwendung einer Look-Up Tabelle und der Ermittlung der Übergangsparameter ein besonders schneller Wechsel des Arbeitspunktes möglich ist. Zudem ist das computerimplementierte Verfahren besonders effizient, sodass die Vorrichtung nur geringe Rechenkapazitäten benötigt und effizient arbeitet.

Die Vorrichtung, insbesondere die Recheneinheit, kann ein Mikrokontroller sein. Ein Mikrokontroller kann besonders kostengünstig sein und energiesparend arbeiten. Beispielsweise kann die Vorrichtung ein Field Programmable Gate Array oder ein System-ona-chip sein.

Die Vorrichtung kann Mittel eingerichtet zur Ausführung des offenbarten Verfahrens umfassen. Die Vorrichtung kann beispielsweise eine Vorrichtung zur Ausführung des Verfahrens zum Wechseln eines Arbeitspunktes eines bidirektionalen Gleichstrom-Gleichstrom-Wandlers sein.

Die Mittel können Hardware- Komponenten und/oder Software-Komponenten umfassen. Die Mittel können beispielsweise mindestens einen Speicher mit Programmanweisungen eines Computerprogramms, z.B. des unten offenbarten Computerprogramms, und mindestens einen Prozessor ausgebildet zum Ausführen von Programmanweisungen aus dem mindestens einen Speicher umfassen. Dementsprechend soll auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, und das offenbarte Verfahren auszuführen.

Alternativ oder zusätzlich können die Mittel ferner eine oder mehrere Kommunikationsschnittstellen (z.B. einen oder mehrere drahtgebundene und/oder drahtlose Kommunikationsschnittstellen, z.B. eine drahtlose Kommunikationsschnittstellen in Form einer Funkschnittstelle) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die offenbarte Vorrichtung auch andere nicht aufgeführte Mittel umfassen kann.

Gemäß einem Ausführungsbeispiel kann die Vorrichtung zwei Berechnungseinheiten, insbesondere zwei Prozessoren, umfassen, wobei die erste Berechnungseinheiten zum Berechnen der neuen Steuerungsparameter, der alten Steuerungsparameter und der Übergangsparameter eingerichtet sein kann, und wobei die zweite Berechnungseinheiten zur Ausgabe des Pulsweitenmodulation-Signals eingerichtet sein kann.

Auf diese Weise kann die Vorrichtung besonders effizient arbeiten, da das Berechnen der neuen Steuerungsparameter, der alten Steuerungsparameter und der Übergangsparameter sowie die Ausgabe der Pulsweitenmodulation-Signals auf getrennten Berechnungseinheiten erfolgen kann. Mithin kann die Vorrichtung besonders effizient und schnell arbeiten.

Die Berechnungseinheit kann beispielsweise der zentrale Verarbeitungseinheit sein. Die Berechnungseinheit kann Berechnungen und Steuerungsaufgaben übernehmen. Die Berechnungseinheit kann ein Kern der Vorrichtung sein.

Gemäß einem Ausführungsbeispiel kann die zweite Berechnungseinheiten mit der doppelten Frequenz wie die Schaltfrequenz betrieben werden.

Auf diese Weise kann das Pulsweitenmodulation-Signal in Halbperioden schaltbar sein. Somit kann der Wechsel zwischen zwei Arbeitspunkten innerhalb einer Halbperiode erfolgen. Dadurch kann die Vorrichtung besonders effizient und schnell sein, sodass die Leistungsübertragung besonders hoch und besonders gleichmäßig sein kann.

Gemäß einem Ausführungsbeispiel kann die Vorrichtung dazu eingerichtet sein, einen ungültigen Vergleichswert in dem Pulsweitenmodulations-Signal in einer vorherigen Pulsweitenmodulations-Periode des Pulsweitenmodulations-Signals zu erkennen, wobei insbesondere die Vorrichtung dazu eingerichtet sein kann, einen ungültigen Vergleichswert in der vorherigen Pulsweitenmodulations-Periode zu erkennen, wenn die folgende Bedingung erfüllt sein kann ${φ}_{vorherige} > 0 , 25 - {d}_{vorherige} ,$
wobei die Vorrichtung dazu eingerichtet sein kann, den ungültigen Vergleichswert in einen gültigen Vergleichswert umzuwandeln,
wobei insbesondere die Vorrichtung dazu eingerichtet sein kann, den ungültigen Vergleichswert in der vorherigen Pulsweitenmodulations-Periode mit folgender Formel in einen gültigen Vergleichswert einer aktuellen Pulsweitenmodulations-Periode umzuwandeln $CMPX = 2 ∗ k ∗ PRD ∗ \left({d}_{vorherige}-0.25+{φ}_{vorherige}\right) .$

Auf diese Weise können auch bei einer Frequenzänderung von der vorherigen Pulsweitenmodulations-Periode zur aktuellen Pulsweitenmodulations-Periode der Arbeitspunkt zuverlässig gewechselt werden. Auf diese Weise kann die Vorrichtung besonders effizient und schnell sein, sodass die Leistungsübertragung besonders hoch und besonders gleichmäßig sein kann.

Beispielsweise kann die Pulsweitenmodulations-Periode nur einen Vergleichswert aufweisen. Die Pulsweitenmodulations-Periode kann die Timer-Periode sein. Die Pulsweitenmodulations-Periode kann insbesondere einer Halbperiode entsprechen. Für jede Pulsweitenmodulations-Periode kann nur ein Vergleichswert vorgesehen sein.

Der Vergleichswert kann eine festgelegte Zahl sein. Der Vergleichswert kann mit dem aktuellen Zählerstand eines Timers verglichen vergleichbar sein. Wenn der Timer den Vergleichswert erreichen kann, kann ein Ereignis ausgelöst werden. Zum Beispiel kann das Ereignis eine Änderung des Pulsweitenmodulations-Signals sein. Ein gültiger Vergleichswert kann kleiner als der Maximalwert sein, den der Timer einnehmen kann. Beispielsweise kann so sichergestellt sein, dass der Timer den gültigen Vergleichswert erreichen kann. Ein ungültiger Vergleichswert kann größer als der Maximalwert sein, den der Timer einnehmen kann. Beispielsweise kann der ungültige Vergleichswert für den Timer nicht erreichbar sein. Der Vergleichswert kann ein Compare-Wert sein.

Das Pulsweitenmodulations-Signal kann ein digitales Rechtecksignal sein. Das Pulsweitenmodulations-Signal kann eine variable Einschaltzeit aufweisen. Das Pulsweitenmodulations-Signal kann einen sich wiederholenden Timer aufweisen. Zum Beispiel kann innerhalb des Timers kann ein erster Vergleichswert den Beginn der Einschaltzeit und ein zweiter Vergleichswert das Ende der Einschaltzeit auslösen.

Die Pulsweitenmodulations-Periode des Pulsweitenmodulations-Signals kann den Beginn der Einschaltzeit oder das Ende der Einschaltzeit umfassen. Die Pulsweitenmodulations-Periode kann einen Vergleichswert zum Beginnen der Einschaltzeit oder einen Vergleichswert zum Ausschalten der Einschaltzeit aufweisen.

*φ_{vorherige}* kann die Phasenverschiebung zwischen der Primärseite und der Sekundärseite der vorherigen Pulsweitenmodulations-Periode sein. dₚᵣₑᵥ kann der Tastgrad der Vollbrücke mit größter Phasenverschiebung in der vorherigen Pulsweitenmodulations-Periode sein. Beispielweise kann die Vollbrücke mit größter Phasenverschiebung in der vorherigen Pulsweitenmodulations-Periode für die positive Leistungsrichtung die Sekundärseite sein. Beispielweise kann die Vollbrücke mit größter Phasenverschiebung in der vorherigen Pulsweitenmodulations-Periode für die negative Leistungsrichtung die Primärseite sein. CMPX kann der aus dem ungültigen Vergleichswert in der vorherigen Pulsweitenmodulations-Periode umgewandelte gültige Vergleichswert der aktuellen Pulsweitenmodulations-Periode sein. k kann der zuvor genannte Faktor sein. k kann der Quotient aus der kleineren Schaltfrequenz und der größeren Schaltfrequenz sein. PRD kann der Maximalwert des Timers des Pulsweitenmodulations-Signals sein.

Insbesondere können die vorherige Pulsweitenmodulations-Periode und die aktuelle Pulsweitenmodulations-Periode eine andere Frequenz aufweisen.

Gemäß einem dritten Aspekt der Erfindung wir die oben genannte Aufgabe mit einem Gleichstrom-Gleichstrom-Wandler gelöst, wobei der Gleichstrom-Gleichstrom-Wandler zum Durchführen des erfindungsgemäßen computerimplementiertes Verfahrens eingerichtet ist, oder wobei der Gleichstrom-Gleichstrom-Wandler eine erfindungsgemäße Vorrichtung umfasst.

Der Gleichstrom-Gleichstrom-Wandler bietet den Vorteil, dass aufgrund der Verwendung einer Look-Up Tabelle und der Ermittlung der Übergangsparameter ein besonders schneller Wechsel des Arbeitspunktes möglich ist. Zudem ist der Gleichstrom-Gleichstrom-Wandler besonders effizient und es wird nur ein geringer Rechenaufwand benötigt.

Gemäß einem vierten Aspekt der Erfindung wir die oben genannte Aufgabe mit einer Ladevorrichtung, insbesondere zum Laden eines Elektrofahrzeugs, mit einem erfindungsgemäßen Gleichstrom-Gleichstrom-Wandler gelöst.

Die Ladevorrichtung bietet den Vorteil, dass aufgrund der Verwendung einer Look-Up Tabelle und der Ermittlung der Übergangsparameter ein besonders schneller Wechsel des Arbeitspunktes möglich ist. Zudem ist die Ladevorrichtung besonders effizient und es wird nur ein geringer Rechenaufwand benötigt.

Gemäß einem fünften Aspekt der Erfindung wird die oben genannte Aufgabe mit einem Computerprogramm gelöst, wobei das Computerprogramm Programmanweisungen umfasst, die dazu ausgebildet sind, bei Ausführung durch mindestens einen Prozessor einen Computer zu veranlassen, die offenbarten Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Weitere Aufgaben, Merkmale, Vorteile und Aspekte der vorliegenden Erfindung werden für den Fachmann aus der folgenden Beschreibung und den beigefügten Ansprüchen ersichtlich. Es sollte jedoch verstanden werden, dass die folgende Beschreibung, die beigefügten Ansprüche und die spezifischen Beispiele, die bevorzugte Ausführungsformen der Anwendung zeigen, nur zur Veranschaulichung gegeben werden. Verschiedene Änderungen und Modifikationen im Rahmen des Geistes und des Umfangs der offengelegten Erfindung werden dem Fachmann beim Lesen der folgenden Ausführungen ohne weiteres einleuchten.

### DEFINITIONEN

Die folgenden Ausdrücke haben im Allgemeinen vorzugsweise die nachstehend aufgeführten Bedeutungen, sofern sich aus dem Kontext, in dem sie verwendet werden, nichts anderes ergibt.

Der hier verwendete Ausdruck "umfassen" schließt neben seiner wörtlichen Bedeutung auch die Ausdrücke "im Wesentlichen bestehen aus" und "bestehen aus" ein und bezieht sich speziell auf diese. Somit bezieht sich der Ausdruck "umfassen" sowohl auf Ausführungsformen, bei denen der Gegenstand, der speziell aufgeführte Elemente "umfasst", keine weiteren Elemente umfasst, als auch auf Ausführungsformen, bei denen der Gegenstand, der speziell aufgeführte Elemente "umfasst", weitere Elemente umfassen kann und/oder tatsächlich umfasst. Ebenso ist der Ausdruck "haben" als der Ausdruck "umfassen" zu verstehen, der auch die Ausdrücke "im Wesentlichen bestehen aus" und "bestehen aus" einschließt und sich auf diese bezieht. Der Ausdruck "bestehen im Wesentlichen aus" bezieht sich, soweit möglich, insbesondere auf Ausführungsformen, bei denen der Gegenstand neben den spezifisch aufgeführten Elementen, aus denen der Gegenstand im Wesentlichen besteht, 20 % oder weniger, insbesondere 15 % oder weniger, 10 % oder weniger oder insbesondere 5 % oder weniger weitere Elemente umfasst.

### FIGUREN

- Fig. 1: bidirektionaler Gleichstrom-Gleichstrom-Wandler;
- Fig. 2: ein Flussdiagramm einer Ausführungsform eines computerimplementierten Verfahrens zum Wechseln eines Arbeitspunktes eines bidirektionalen Gleichstrom-Gleichstrom-Wandlers;
- Fig. 3: eine Lookup Tabelle;
- Fig. 4: ein Flussdiagramm einer Ausführungsform zum Ermitteln mindestens einer Stützstelle in einer Lookup Tabelle basierend auf den neuen Eingangsparametern;
- Fig. 5: ein Flussdiagramm einer Ausführungsform zum Ermitteln der Übergangsparameter basierend auf den neuen Steuerungsparametern und den alten Steuerungsparametern;
- Fig. 6: Perioden des Wechselrichters zum Wechseln des Arbeitspunkts;
- Fig. 7: eine schematische Darstellung einer Ausführungsform einer Vorrichtung,
- Fig. 8: ein Flussdiagramm einer Ausführungsform zum Umwandeln eines ungültigen Vergleichswert in einen gültigen Vergleichswert.

### SPEZIELLE BESCHREIBUNG

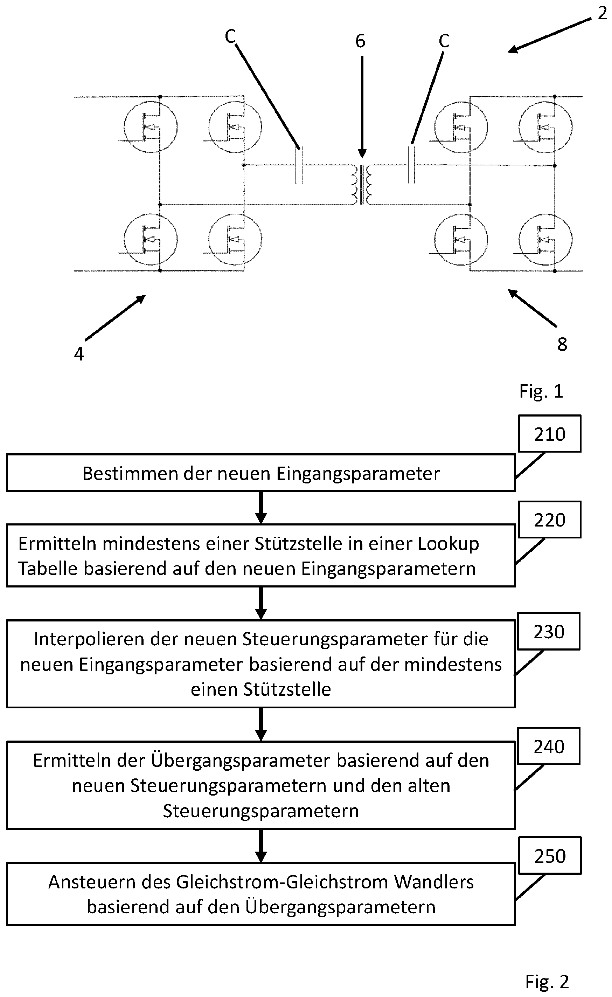

Fig. 1 zeigt einen bidirektionaler Gleichstrom-Gleichstrom-Wandler 2, bei dem eine Primärseite 4 über einen Transformator 6 mit einer Sekundärseite 8 gekoppelt ist. Die Primärseite 4 und die Sekundärseite 8 weisen jeweils einen Kondensator C auf. Der Gleichstrom-Gleichstrom-Wandler 2 kann auch ohne die beiden Kondensatoren C ausgebildet sein.

Fig. 2 zeigt ein Flussdiagramm einer Ausführungsform eines computerimplementierten Verfahrens zum Wechseln eines Arbeitspunktes eines bidirektionalen Gleichstrom-Gleichstrom-Wandlers 2. Das computerimplementierten Verfahren zum Wechseln eines Arbeitspunktes eines bidirektionalen Gleichstrom-Gleichstrom-Wandlers 2, bei dem eine Primärseite 4 über einen Transformator 6 mit einer Sekundärseite 8 gekoppelt ist, umfasst die folgenden Schritte. In Schritt 210 werden die neuen Eingangsparameter bestimmt. Anschließend wird in Schritt 220 mindestens eine Stützstelle in einer Lookup Tabelle basierend auf den neuen Eingangsparametern ermittelt. In Schritt 230 werden die neuen Steuerungsparameter für die neuen Eingangsparameter basierend auf der mindestens einen Stützstelle interpoliert. Im Anschluss werden in Schritt 240 die Übergangsparameter basierend auf den neuen Steuerungsparametern und den alten Steuerungsparametern ermittelt und dann in Schritt 250 wird der Gleichstrom-Gleichstrom Wandlers basierend auf den Übergangsparametern angesteuert.

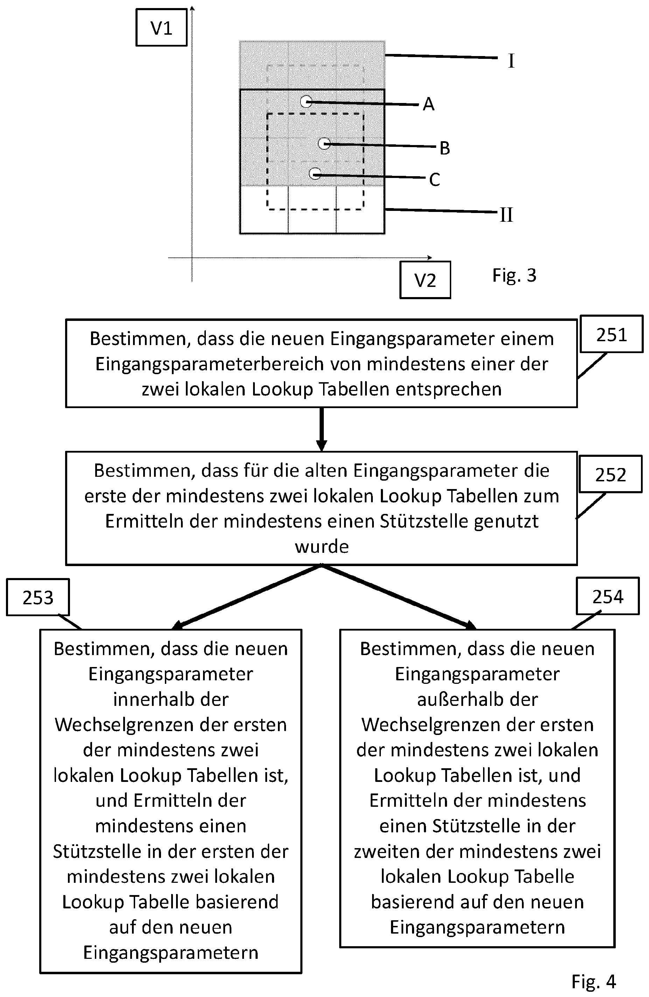

Fig. 3 zeigt zwei lokale Lookup Tabellen (LUTs) für die Spannung der Primärseite (V1) und die Spannung der Sekundärseite (V2). Die Übertragungsleistung fehlt, um eine einfache Darstellung zu ermöglichen. Für je drei Werte von V1 und V2 spannt sich je eine lokale LUT über insgesamt 9 Felder auf. Dabei ist die erste LUT I grau und die zweite LUT II umfasst die drei weißen Felder und die unteren drei grauen Felder. Die erste LUT I wird genutzt, wenn die Eingangsparameter innerhalb der LUT I liegen bei Punkt A. Die hinterlegte LUT ist so erstellt, dass innerhalb des hier grau dargestellten Bereichs auch bei Interpolation der Stützstellen alle Nebenbedingungen für eine saubere Modulation der DAB eingehalten werden. Werden nun neue Eingangsparameter mit einer geringen Spannung der Primärseite bestimmt, so liegen die Eingangsparameter bei Punkt B. Hier wird zunächst weiter die LUT I genutzt. Erst beim Bestimmen einer Spannung der Primärseite unterhalb des gestrichelt dargestellten Schwellwert wie bei Punkt C wird die LUT II genutzt.

Fig. 4 zeigt ein Flussdiagramm einer Ausführungsform zum Ermitteln mindestens einer Stützstelle in einer Lookup Tabelle basierend auf den neuen Eingangsparametern. In Schritt 251 wird bestimmt, dass die neuen Eingangsparameter einem Eingangsparameterbereich von mindestens einer der zwei lokalen Lookup Tabellen entsprechen. Anschließend wird in Schritt 252 bestimmt, dass für die alten Eingangsparameter die erste der mindestens zwei lokalen Lookup Tabellen zum Ermitteln der mindestens einen Stützstelle genutzt wurde. Anschließend kann das Verfahren entweder mit Schritt 253 oder mit Schritt 254 weitergeführt werden. In Schritt 253 wird bestimmt, dass die neuen Eingangsparameter innerhalb der Wechselgrenzen der ersten der mindestens zwei lokalen Lookup Tabellen ist, und mindestens eine Stützstelle in der ersten der mindestens zwei lokalen Lookup Tabelle wird basierend auf den neuen Eingangsparametern bestimmt. Alternativ zu Schritt 253 wird in Schritt 254 bestimmt, dass die neuen Eingangsparameter außerhalb der Wechselgrenzen der ersten der mindestens zwei lokalen Lookup Tabellen sind, und mindestens eine Stützstelle in der zweiten der mindestens zwei lokalen Lookup Tabelle wird basierend auf den neuen Eingangsparametern bestimmt.

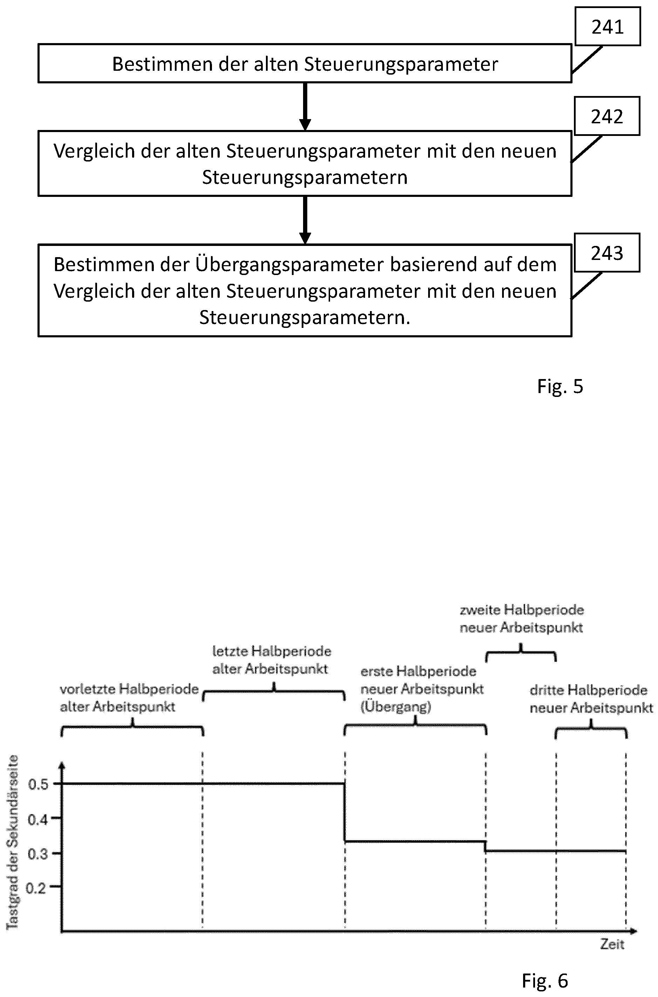

Fig. 5 zeigt ein Flussdiagramm einer Ausführungsform zum Ermitteln der Übergangsparameter basierend auf den neuen Steuerungsparametern und den alten Steuerungsparametern. Zunächst werden in Schritt 241 die alten Steuerungsparameter bestimmt. Anschließend werden in Schritt 242 die alten Steuerungsparameter mit den neuen Steuerungsparametern verglichen. Abschließend werden die Übergangsparameter basierend auf dem Vergleich der alten Steuerungsparameter mit den neuen Steuerungsparametern in Schritt 243 bestimmt.

Fig. 6 zeigt als Steuerungsparameter den Tastgrad der Sekundärseite beim Wechseln des Arbeitspunkts. In Fig. 6 ist der Tastgrad der Sekundärseite in der vorletzten Halbperiode und der letzten Halbperiode des alten Arbeitspunkts, der Halbperiode für den Übergang zwischen den Arbeitspunkten sowie der zwei Halbperioden des neuen Arbeitspunktes gezeigt. Durch die Längen der Halbperioden wird ersichtlich, dass die neue Schaltfrequenz größer ist als die alte Schaltfrequenz, da die Längen der Halbperioden reziprok mit der Schaltfrequenz zusammenhängen.

Die beiden letzten Halbperioden des alten Arbeitspunkts werden mit den alten Steuerungsparametern betrieben, während die beiden Halbperioden des neuen Arbeitspunktes mit den neuen Steuerungsparametern betrieben werden. In der Halbperiode für den Übergang wird die Magnetisierung des Transformators abgebaut und für den neuen Arbeitspunkt wieder aufgebaut. Der Übergang zwischen den Arbeitspunkten erfolgt innerhalb einer Halbperiode. In der Halbperiode werden die Übergangsparameter angewendet. Die Halbperiode wird aufgrund der unterschiedlichen Schaltfrequenzen der alten Steuerungsparameter und der neuen Steuerungsparameter mit der kleineren der beiden Schaltfrequenzen geschaltet.

Der Übergangstastgrads der Primärseite wird nach folgender Formel berechnet: ${d}_{1 , transition} = \frac{{d}_{1 , alt} + k \times {d}_{1 , neu}}{2} ,$

Der Übergangstastgrads der Sekundärseite wird nach folgender Formel berechnet: ${d}_{2 , transition} = \frac{{d}_{2 , alt} + k \times {d}_{2 , neu}}{2} ,$

Der Übergangsphasenversatzes zwischen der Primärseite und der Sekundärseite wird nach folgender Formel berechnet. ${φ}_{transition} = \left({φ}_{alt}+k\times {φ}_{neu}\right) / 2$

Hierbei ist k=f_{sw,alt}/f_{sw,neu}.

Für den Fall, dass die alte Schaltfrequenz größer ist als die neue Schaltfrequenz, würde der Übergang bei der neuen Schaltfrequenz stattfinden und die Übergangsparameter würden nach den folgenden Formeln berechnet: ${d}_{1 , transition} = \frac{{d}_{1 , neu} + k \times {d}_{1 , alt}}{2} ,$ ${d}_{2 , transition} = \frac{{d}_{2 , neu} + k \times {d}_{2 , alt}}{2} ,$ ${φ}_{transition} = \left({φ}_{neu}+k\times {φ}_{alt}\right) / 2$

In diesem Fall wäre k=f_{sw,neu}/f_{sw,alt}.

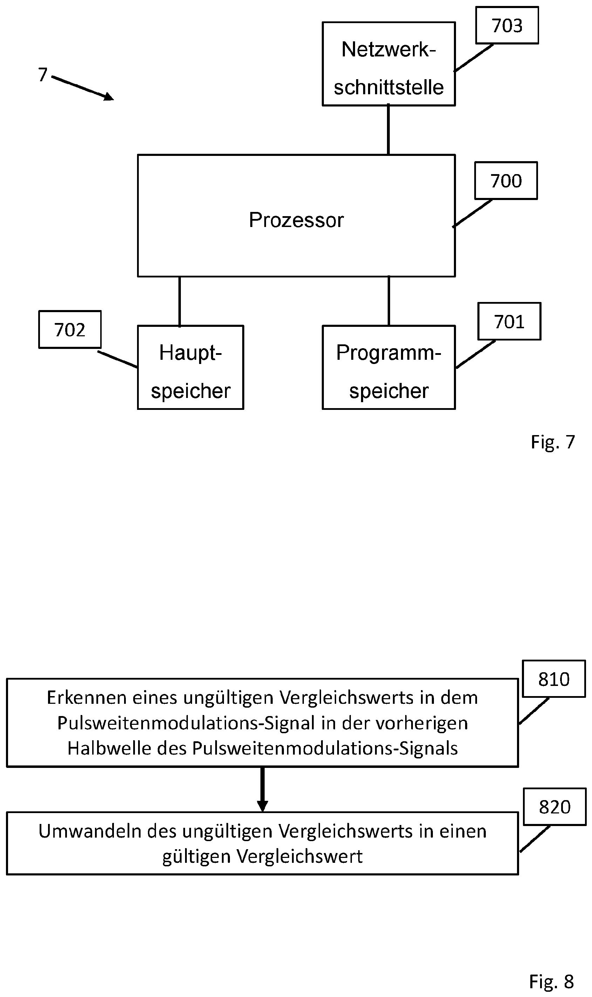

Fig. 7 zeigt eine schematische Darstellung einer Ausführungsform einer Vorrichtung 7 gemäß der Erfindung.

Die Vorrichtung 7 umfasst einen Prozessor 700 und verbunden mit dem Prozessor 700 einen ersten Speicher als Programmspeicher 701, einen zweiten Speicher als Hauptspeicher 702 und eine Netzwerkschnittstelle 703.

Unter einem Prozessor 700 soll beispielsweise ein Mikroprozessor (Engl. Central Processing Unit, CPU), ein digitaler Signalprozessor (DSP), eine Anwendungsspezifische Integrierte Schaltung (ASIC), eine Mikrokontrolleinheit, ein Mikrocontroller, ein Field Programmable Gate Array (FPGA), oder ein graphischer Prozessor (Engl: Graphics Processing Unit, GPU) verstanden werden. Es versteht sich, dass die Vorrichtung 7 auch mehrere Prozessoren 700 umfassen kann.

Der Prozessor 700 führt Programmanweisungen aus, die in Programmspeicher 701 gespeichert sind, und speichert beispielsweise Zwischenergebnisse oder Ähnliches in Hauptspeicher 702. Die Verwendung eines (zusätzlichen) graphischen Prozessors kann beispielsweise zur Ausführung von Algorithmen zum maschinellen Lernen und/oder künstlichen neuronalen Netzwerken vorteilhaft sein.

In Programmspeicher 701 sind beispielsweise Programmanweisungen gespeichert, die den Prozessor 700, wenn er die Programmanweisungen ausführt, veranlassen, das Verfahren gemäß dem ersten Aspekt der Erfindung zumindest teilweise auszuführen und/oder zu steuern. Das Verfahren gemäß dem ersten Aspekt der Erfindung wird beispielsweise in Fig. 1 gezeigt. Alternativ oder zusätzlich sind in Programmspeicher 701 beispielsweise Programmanweisungen gespeichert, die den Prozessor 700, wenn er die Programmanweisungen ausführt, veranlassen, das Verfahren gemäß dem zweiten Aspekt der Erfindung zumindest teilweise auszuführen und/oder zu steuern. Das Verfahren gemäß dem zweiten Aspekt der Erfindung wird beispielsweise in Fig. 3 gezeigt.

Programmspeicher 701 enthält ferner beispielsweise das Betriebssystem der Vorrichtung 7, das beim Starten der Vorrichtung 7 zumindest teilweise in Hauptspeicher 702 geladen und vom Prozessor 700 ausgeführt wird.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 7 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher 701 ist beispielsweise ein nicht-flüchtiger Speicher wie ein Flash-Speicher, ein EEPROM-Speicher (elektrisch löschbarer programmierbarer Nur-Lese-Speicher), ein Magnetspeicher und/oder ein optischer Speicher. Ein Hauptspeicher 702 ist zum Beispiel ein flüchtiger oder nicht-flüchtiger Speicher, insbesondere ein Speicher mit wahlfreiem-Zugriff (RAM) wie ein statischer RAM-Speicher (SRAM), ein ferroelektrischer RAM-Speicher (FeRAM), ein dynamischer RAM-Speicher (DRAM) und/oder ein magnetischer RAM-Speicher (MRAM).

Hauptspeicher 702 und Programmspeicher 701 können auch als ein Speicher ausgebildet sein. Alternativ können Hauptspeicher 702 und/oder Programmspeicher 701 jeweils durch mehrere Speicher gebildet werden. Ferner können Hauptspeicher 702 und/oder Programmspeicher 701 auch Teil des Prozessors 700 sein.

Prozessor 700 steuert die Netzwerkschnittstelle 703, welche beispielsweise eingerichtet ist über eine Verbindung in einem Kommunikationsnetzwerk Informationen mit einer entfernten Vorrichtung auszutauschen (z.B. zu senden und/oder zu empfangen). Im Folgenden wird beispielhaft davon ausgegangen, dass die Netzwerkschnittstelle 703 eine drahtgebundene Netzwerkschnittstelle ist. Ein Beispiel für eine drahtgebundene Netzwerkschnittstelle ist eine Ethernet-Schnittstelle. Zum Beispiel kann die Vorrichtung 7 die Netzwerkschnittstelle 703 verwenden, um Informationen wie beispielsweise die Verkokung der Steam Crackers oder die Alterung des Steam Crackers auszugeben. Hierzu kann die Netzwerkschnittstelle 703 beispielsweise mit einem Bildschirm und/oder einem Lautsprecher verbunden sein.

Die Komponenten 700 bis 703 der Vorrichtung 7 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Vorrichtung 7 neben den Komponenten 700 bis 703 weitere Komponenten (z.B. eine Benutzerschnittstelle) umfassen kann. Die Vorrichtung kann mit einer Ausgabevorrichtung wie beispielsweise einem Bildschirm und/oder einem Lautsprecher verbunden sein.

Fig. 8 zeigt ein Flussdiagramm einer Ausführungsform zum Umwandeln eines ungültigen Vergleichswert in einen gültigen Vergleichswert. In Schritt 810 wird ein ungültiger Vergleichswert in dem Pulsweitenmodulations-Signal in der vorherigen Pulsweitenmodulations-Periode des Pulsweitenmodulations-Signals erkannt. Anschließend wird in Schritt 820 der ungültige Vergleichswert in einen gültigen Vergleichswert umgewandelt.

## Patentansprüche

1. Computerimplementiertes Verfahren zum Wechseln eines Arbeitspunktes eines bidirektionalen Gleichstrom-Gleichstrom-Wandlers (2), bei dem eine Primärseite (4) über einen Transformator (6) mit einer Sekundärseite (8) gekoppelt ist, wobei das Verfahren Folgendes umfasst:
- Bestimmen der neuen Eingangsparameter,
- Ermitteln mindestens einer Stützstelle in einer Lookup Tabelle basierend auf den neuen Eingangsparametern,
- Interpolieren der neuen Steuerungsparameter für die neuen Eingangsparameter basierend auf der mindestens einen Stützstelle,
- Ermitteln der Übergangsparameter basierend auf den neuen Steuerungsparametern und den alten Steuerungsparametern,
- Ansteuern des Gleichstrom-Gleichstrom Wandlers basierend auf den Übergangsparametern.

2. Computerimplementiertes Verfahren nach Anspruch 1,
**dadurch gekennzeichnet, dass**
die Lookup Tabelle mindestens zwei lokale Lookup Tabellen umfasst,
wobei die Eingangsparameter der mindestens zwei lokalen Lookup Tabellen zumindest teilweise überlappen.

3. Computerimplementiertes Verfahren nach Anspruch 1 oder 2,
**dadurch gekennzeichnet, dass**
das Ermitteln mindestens einer Stützstelle in einer Lookup Tabelle basierend auf den neuen Eingangsparametern die folgenden Schritte umfasst:
- Bestimmen, dass die neuen Eingangsparameter einem Eingangsparameterbereich von mindestens einer der zwei lokalen Lookup Tabellen entsprechen,
- Bestimmen, dass für die alten Eingangsparameter die erste der mindestens zwei lokalen Lookup Tabellen zum Ermitteln der mindestens einen Stützstelle genutzt wurde, und
a) Bestimmen, dass die neuen Eingangsparameter innerhalb der Wechselgrenzen der ersten der mindestens zwei lokalen Lookup Tabellen sind, und Ermitteln der mindestens einen Stützstelle in der ersten der mindestens zwei lokalen Lookup Tabelle basierend auf den neuen Eingangsparametern, oder
b) Bestimmen, dass die neuen Eingangsparameter außerhalb der Wechselgrenzen der ersten der mindestens zwei lokalen Lookup Tabellen sind, und Ermitteln der mindestens einen Stützstelle in der zweiten der mindestens zwei lokalen Lookup Tabelle basierend auf den neuen Eingangsparametern.

4. Computerimplementiertes Verfahren nach einem der Ansprüche 1 bis 3,
**dadurch gekennzeichnet, dass**
das Ermitteln der Übergangsparameter basierend auf den neuen Steuerungsparametern und den alten Steuerungsparametern die folgenden Schritte umfasst:
- Bestimmen der alten Steuerungsparameter,
- Vergleich der alten Steuerungsparameter mit den neuen Steuerungsparametern,
- Bestimmen der Übergangsparameter basierend auf dem Vergleich der alten Steuerungsparameter mit den neuen Steuerungsparametern.

5. Computerimplementiertes Verfahren nach Anspruch 3,
**dadurch gekennzeichnet, dass**
beim Vergleich der alten Steuerungsparameter mit den neuen Steuerungsparameter dieselbe Schaltfrequenz ermittelt wird, und das Verfahren die folgenden Schritte umfasst:
- Berechnen des Übergangstastgrads der Primärseite nach folgender Formel ${d}_{1 , transition} = \frac{{d}_{1 , alt} + {d}_{1 , neu}}{2} ,$
- Berechnen des Übergangstastgrads der Sekundärseite nach folgender Formel ${d}_{2 , transition} = \frac{{d}_{2 , alt} + {d}_{2 , neu}}{2} ,$
- Berechnen des Übergangsphasenversatzes zwischen der Primärseite und der Sekundärseite nach folgender Formel $transition = \left({φ}_{alt}+{φ}_{neu}\right) / 2$

6. Computerimplementiertes Verfahren nach Anspruch 3,
**dadurch gekennzeichnet, dass**
beim Vergleich der alten Steuerungsparameter mit den neuen Steuerungsparameter unterschiedliche Schaltfrequenzen ermittelt werden, und das Verfahren die folgenden Schritte umfasst:
a) Bestimmen, dass die neue Schaltfrequenz größer ist als die alte Schaltfrequenz,
- Berechnen des Übergangstastgrads der Primärseite nach folgender Formel ${d}_{1 , transition} = \frac{{d}_{1 , alt} + k \times {d}_{1 , neu}}{2} ,$
- Berechnen des Übergangstastgrads der Sekundärseite nach folgender Formel ${d}_{2 , transition} = \frac{{d}_{2 , alt} + k \times {d}_{2 , neu}}{2} ,$
- Berechnen des Übergangsphasenversatzes zwischen der Primärseite und der Sekundärseite nach folgender Formel $transition = \left({φ}_{alt}+k\times {φ}_{neu}\right) / 2$
- wobei k=f_{sw,alt}/f_{sw,neu} ist.
oder
b) Bestimmen, dass die alte Schaltfrequenz größer als die neue Schaltfrequenz ist,
- Berechnen des Übergangstastgrads der Primärseite nach folgender Formel ${d}_{1 , transition} = \frac{{d}_{1 , neu} + k \times {d}_{1 , alt}}{2} ,$
- Berechnen des Übergangstastgrads der Sekundärseite nach folgender Formel, ${d}_{2 , transition} = \frac{{d}_{2 , neu} + k \times {d}_{2 , alt}}{2} ,$
- Berechnen des Übergangsphasenversatzes zwischen der Primärseite und der Sekundärseite nach folgender Formel ${φ}_{transition} = \left({φ}_{neu}+k\times {φ}_{alt}\right) / 2$
- wobei k=f_{sw,neu}/f_{sw,alt} ist.

7. Computerimplementiertes Verfahren nach einem der Ansprüche 1 bis 6,
**dadurch gekennzeichnet, dass**
der Übergang zwischen den Arbeitspunkten innerhalb einer Halbperiode erfolgt, wobei in der Halbperiode die Übergangsparameter angewendet werden.

8. Computerimplementiertes Verfahren nach einem der Ansprüche 6 oder 7,
**dadurch gekennzeichnet, dass**
die Halbperiode bei unterschiedlichen Schaltfrequenzen der alten Steuerungsparameter und der neuen Steuerungsparameter mit der kleineren der beiden Schaltfrequenz geschaltet wird.

9. Vorrichtung, insbesondere eine Recheneinheit, eingerichtet zur Durchführung des computerimplementierten Verfahrens nach einem der Ansprüche 1 bis 8.

10. Vorrichtung nach Anspruch 9,
**dadurch gekennzeichnet, dass**
die Vorrichtung zwei Berechnungseinheiten, insbesondere zwei Prozessoren, umfasst, wobei die erste Berechnungseinheiten zum Berechnen der neuen Steuerungsparameter, der alten Steuerungsparameter und der Übergangsparameter eingerichtet ist, und wobei die zweite Berechnungseinheiten zur Ausgabe der Pulsweitenmodulation-Signals eingerichtet ist.

11. Vorrichtung nach Anspruch 9 oder 10,
**dadurch gekennzeichnet, dass**
die zweite Berechnungseinheiten mit der doppelten Frequenz wie die Schaltfrequenz betrieben wird.

12. Vorrichtung nach einem der Ansprüche 9 bis 11,
**dadurch gekennzeichnet, dass**
die Vorrichtung dazu eingerichtet ist, einen ungültigen Vergleichswert in dem Pulsweitenmodulations-Signal in der vorherigen Pulsweitenmodulations-Periode des Pulsweitenmodulations-Signals zu erkennen,
wobei insbesondere die Vorrichtung dazu eingerichtet ist, einen ungültigen Vergleichswert in der vorherigen Pulsweitenmodulations-Periode zu erkennen, wenn die folgende Bedingung erfüllt ist ${φ}_{vorherige} > 0 , 25 - {d}_{vorherige} ,$
wobei die Vorrichtung dazu eingerichtet ist, den ungültigen Vergleichswert in einen gültigen Vergleichswert umzuwandeln,
wobei insbesondere die Vorrichtung dazu eingerichtet ist, den ungültigen Vergleichswert in der vorherigen Pulsweitenmodulations-Periode mit folgender Formel in einen gültigen Vergleichswert der aktuellen Pulsweitenmodulations-Periode umzuwandeln $CMPX = 2 ∗ k ∗ PRD \left({d}_{vorherige}-0.25+{φ}_{vorherige}\right) .$

13. Gleichstrom-Gleichstrom-Wandler **dadurch gekennzeichnet, dass** der Gleichstrom-Gleichstrom-Wandler zum Durchführen des computerimplementierten Verfahrens nach einem der Patentansprüche 1 bis 8 eingerichtet ist, oder
der Gleichstrom-Gleichstrom-Wandler eine Vorrichtung nach einem der Patentansprüche 9 bis 12 umfasst.

14. Ladevorrichtung, insbesondere zum Laden eines Elektrofahrzeugs, mit einem Gleichstrom-Gleichstrom-Wandler nach Anspruch 13.

15. Computerprogramm, wobei das Computerprogramm Programmanweisungen umfasst, die dazu ausgebildet sind, bei Ausführung durch mindestens einen Prozessor einen Computer zu veranlassen, das Verfahren nach einem der Ansprüche 1 bis 8 auszuführen.
